# NEUE EUROPÄISCHE PATENTSCHRIFT

(11) **EP 0 196 345 B2**
(45) Veröffentlichungstag und Bekanntmachung des Hinweises auf die Entscheidung über den Einspruch: **27.04.1994**
(45) Hinweis auf die Patenterteilung: 06.07.1988
(21) Anmeldenummer: 85103920.6
(22) Anmeldetag: 01.04.1985
(51) Int. Cl.: B29B 7/76, B29B 7/88

(54) **Verfahren und Vorrichtung zum Herstellen von Zellschaum**
Method and apparatus for producing foam
Procédé et dispositif pour produire des mousses

(43) Veröffentlichungstag der Anmeldung: 08.10.1986
(73) Patentinhaber: Krauss-Maffei Aktiengesellschaft, 80997 München (DE)
(72) Erfinder: Bauer, Adolf, D-8037 Olching (DE)
(74) Vertreter: Konle, Tilmar, Dipl.-Ing.

(56) Entgegenhaltungen:
- DE-A- 1 629 650
- DE-A- 2 029 719
- DE-A- 2 029 719
- DE-A- 2 645 937
- FR-A- 1 376 485
- FR-A- 1 376 485
- FR-A- 1 588 789
- FR-A- 2 158 735
- US-A- 3 849 074

## Beschreibung

Die Erfindung bezieht sich auf ein Verfahren gemäß dem Oberbegriff der nebengeordneten Patentansprüche 1 bis 3 sowie auf eine Vorrichtung gemäß dem Oberbegriff der nebengeordneten Patentansprüche 5 bis 7. Ein Verfahren und eine Vorrichtung dieser Art sind aus der DE-A 2 645 937 bekannt.

Bei der Herstellung von Zellschaum aus zwei oder mehreren reaktiven Kunststoffkomponenten und einem flüssigen Treibmittel wird das Treibmittel z. B. Freon 11, einer Kuststoffkomponente, z. B. Polyol, vor deren Vermischung mit den übrigen Komponenten zugemischt. Das Treibmittel geht durch die bei der Reaktion der Kunststoffkomponenten in der Gießform entstehende Wärme in den gasförmigen Zustand über und erzeugt eine Zellstruktur. Bei der Abkühlung des Zellschaums erfolgt eine Rückkehr des Treibmittels in den Flüssigzustand. Falls die Zellwände ausreichend stabil sind, tritt nach und nach Atmosphärenluft in die Zellstruktur ein, wodurch die Zellen mit Luft gefüllt werden. Bei sehr dünnen Zellwänden würde ohne Zusatzmaßnahmen die Zellstruktur schrumpfen. In solchen Fällen wird ein Inertgas, z.B. komprimierte Luft, der Kunststoffmischung zugesetzt, welches die Zellen sofort füllt und das erwähnten Schrumpfen verhindert. Das Inertgas läßt sich jedoch anders als das flüssige Treibmittel nicht der einen reaktiven Kunststoffkomponente vor dem Mischvorgang mit entsprechend hohem Druck zusetzen, da sich das Einmischen von hochkomprimierten Gas in die flüssige Komponente nicht mit der erforderlichen Genauigkeit dosieren läßt. Ferner ist für die erforderliche Kompression des Inertgases (bis über 200 bar) ein erheblicher apparativer Aufwand erforderlich, der sich bei realen Betriebsbedingungen nicht vertreten läßt.

Aus den genannten Gründen wird bei dem bekannten Verfahren nach der DE-A 2 538 437 das Inertgas über einen axialen Kanal des Austragskolbens in die Mischkammer eingeleitet, welche während der Mischphase nur einen Druck von etwa 5 bar aufweist, so daß das Inertgas mit einem entsprechend niedrigen Druck von etwa 6 bis 7 bar zugemischt und dabei gut dosiert werden kann. Die kegelige Austrittsöffnung des Kanals in der Kolbenstirmfläche läßt sich durch ein kegeliges Verschlußstück verschließen, um den Eintritt von gemischten Kunststoffmaterial aus der Mischkammer in den axialen Kanal zu verhindern. Das Verschlußstück wird über einen durch den axialen Kanal hindurchgeführten Stift betätigt. Bei den geringen Abmessungen des Austragskolbens (der noch dazu mit axialen Rezirkulationsnuten für die Kunststoffkomponenten versehen ist) von z. B. 5 mm im Durchmesser und 200 mm in der Länge bleibt für den axialen Kanal und den darin geführten Stift nur noch ein äußerst geringer Durchmesser von z. B. 0.8 mm übrig, was herstellungstechnisch große Probleme verursacht. Zudem läßt sich trotz des kegeligen Verschlußstücks nicht ganz vermeiden, daß gemischtes Kunststoffmaterial in den axialen Kanal eindringt, da sich der Druck in der Mischkammer beim Austrag der Mischung infolge der notwendigen Drosselung der Mischkammermündung sehr stark erhöht (auf etwa 40 bar). Da dieser erhöhte Druck auf die Stirnfläche des Austragskolbens während des gesamten Austragsvorganges einwirkt, reicht die Dichtwirkung der Kegelflächen zwischen dem Verschlußstück und der Kanalmündung nicht aus, um das Eindringen des stark komprimierten Kunststoffmaterials zu verhindern. Das eingedrungene Material kann wegen seiner starken Klebeeigenschaften auf Metallflächen durch das Inertgas nicht ausgespült werden und härtet daher im axialen Kanal aus, was bei dem ohnehin sehr kleinen Kanalquerschnitt schon nach kurzer Betriebsdauer zum völligen Verstopfen des axialen Kanals führt. In der Praxis muß der axiale Kanal in Abständen von etwa 4 Stunden gereinigt werden, was die Demontage der Hydraulikeinheit und den Ausbau des Austragskolbens erfordert.

Es ist ferner bei dem sogenannten « Frothing » - Verfahren bekannt (DE-A 2 513 492), ein flüssiges Treibmittel mit niedrigem Siedepunkt, z. B. R 12, im Beruhigungskanal eines Winkelmischkopfes zuzumischen, bei welchem sich die Mischkammer in einen rechtwinklig zu ihr angebrachten Beruhigungskanal öffnet. Das Treibmittel wird gegenüber der Mündung der Mischkammer im Gegenstrom injiziert. Dabei entspannt sich das flüssige Treibmittel und geht wegen seines niedrigen Siedepunktes in den gasförmigen Zustand über, so daß sich im Beruhigungskanal ein Kunststoffschaum bildet. Das Zusetzen eines Inertgases ist bei dem bekannten Verfahren nicht vorgesehen. Zudem würde das Einmischen von Inertgas in dem Beruhigungskanal zu keiner befriedigenden Durchmischung führen, selbst wenn anstelle eines Treibmittels mit niedrigem Siedepunkt ein normales Treibmittel (eingemischt in die eine Komponente) verwendet würde.

Die Aufgabe der Erfindung besteht demgegenüber darin, verfahrenstechnische und konstruktive Maßnahmen anzugeben, um Inertgas und Treibmittel mit hohem Durchmischungsgrad den reaktiven Kunststoffkomponenten zuzusetzen und dabei ein Verstopfen der Zuführung infolge Verunreinigung durch aushärtendes, gemischtes Kunststoffmaterial mit Sicherheit zu vermeiden.

Diese Aufgabe wird erfindungsgemäß durch die kennzeichnenden Merkmale der nebengeordneten Patentansprüche 1 bis 3 und 5 bis 7 gelöst.

Vorteilhafte Ausgestaltungen des erfindungsgemäßen Verfahrens ergeben sich aus dem Unteranspruch 4. Vorteilhafte Ausgestaltungen und Weiterbildungen der erfindungsgemäßen Vorrichtung ergeben sich aus den Unteransprüchen 8 bis 11.

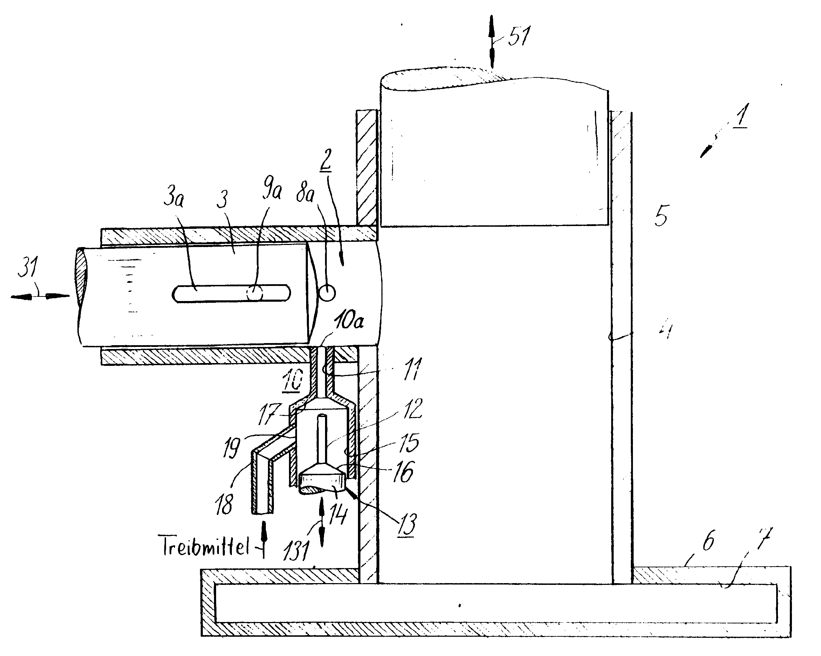

Die Erfindung wird anhand eines in der Zeichnung dargestellten Ausführungsbeispiels näher erläutert.

Die Figur zeigt einen schematischen, nicht maßstäblichen Schnitt durch einen Winkelmischkopf, bei welchem die erfindungsgemäßen Maßnahmen verwirklicht sind.

Der dargesteilte Winkelmischkopf 1 weist eine Mischkammer 2 und einen senkrecht dazu angeordneten Nachmisch- oder Beruhigungskanal 4 auf. In der Mischkammer 2 ist ein Austragskolben 3 angeordnet, welcher von einer nicht dargestellten Hydraulikeinheit in Richtung des Doppelpfeils 31 reversierend bewegbar ist. In dem Kanal 4 ist ebenfalls ein Austragskolben 5 angeordnet, welcher von einer weiteren, nicht dargestellten Hydraulikeinheit in Richtung des Doppelpfeils 51 reversierend bewegbar ist. Der Kanal 4 weist ein wesentlich größeres Volumen (größerer Durchmesser, größere axiale Länge) als die Mischkammer 2 auf, um den turbulent aus der Mischkammer 2 austretenden Materialstrom um 90° umzulenken und zu beruhigen. Der Materialstrom tritt laminar aus dem Kanal 4 in den Formhohlraum 7 einer schematisch angedeuteten Gießform 6 ein. Die Gießform ist an einem nicht gezeigten Formträger befestigt.

In die Mischkammer 2 münden senkrecht zur Zeichenebene Zuführungen für reaktive Kunststoffkomponenten, z. B. Isocyanat und Polyol im Falle der Herstellung von Polyurethan. Von den kreisförmigen Mündungsöffnungen dieser Zuführungen ist nur die Öffnung 8a in der Zeichnung sichtbar. Die nicht sichtbare Öffnung liegt diametral der Öffnung 8a gegenüber, damit sich die unter hohem Druck (bis zu 200 bar) zugeführten reaktiven Kunststoffkomponenten im Gegenstrom miteinander vermischen, wenn der Austragskolben 3 in der gezeigten Stellung die Mündungsöffnungen der Kunststoffkomponenten freigibt. Nach erfolgter Injektion der Kunststoff-komponenten in die Mischkammer 2 wird der Kolben 3 in Austragsrichtung bewegt, wodurch die Mündungsöffnungen der Kunststoffkomponenten durch den Kolben 3 abgesperrt werden. Nach erfolgter Absperrung wird über Rezirkulationsnuten in der Mantelfläche des Kolbens 3 (von denen nur die eine Nut 3a sichtbar ist, während die andere Nut diametral gegenüberliegt) eine Verbindung zwischen den Kunststoffzuführungen und zugeordneten Rücklaufleitungen (von denen wiederum nur die eine Rücklaufleitung mit ihrer Mündungsöffnung 9a sichtbar ist) aufgesteuert. Diese Rezirkulationsverbindung bleibt durch entsprechende Wahl der axialen Länge der Nuten solange bestehen, bis der Kolben 3 in seine gezeigte Ausgangsstellung zurückkehrt, um einen neuen Mischzyklus oder « Schuß » zu beginnen.

Erfindungsgemäß liegt in oder in der Nähe der Radialebene durch die Mündungen der Komponentenzuführungen (welche Radialebene senkrecht zur Zeichenebene verläuft) die Mündung 10a einer weiteren Zuführung 10, über welche ein Inertgas, z. B. komprimierte Luft, den reaktiven Kunststoffkomponenten gleichzeitig oder knapp zeitversetzt mit deren Eintritt in die Mischkammer 2 zugesetzt wird. Der Druck des Inertgases ist etwas größer als der Druck innerhalb der Mischkammer 2. z. B. 6 bis 7 bar bei einem Mischkammerdruck von z. B. 5 bar.

Das zur Zellschaumherstellung benötigte Treibmittel wird ebenfalls durch die weitere Zuführung 10 direkt in die Mischkammer 2 injiziert, wobei das Treibmittel nur auf etwa 6 bis 7 bar gegenüber 200 bar bei der erstgenannten Möglichkeit komprimiert zu werden braucht. Das Inertgas und das Treibmittel werden aufeinanderfolgend der weiteren Zuführung 10 zugeführt. Gegebenenfalls können über die weitere Zuführung 10 noch weitere Zuschlagsstoffe, wie z. B. Farbe, direkt in die Mischkammer 2 injiziert werden.

Die in der Figur eingezeichnete Lage der Mündung 10a geringfügig vor der Radialebene (in Austragsrichtung der Mischkammer 2 gesehen) ergibt sich durch die zylindrische Krümmung der Stirnfläche des Austragskolbens 3, der in seiner anderen Endstellung bündig an dem Kolben 5 des Kanals 4 anliegt.

Alternativ ist es auch möglich, die Mündung 10a aus der genannten Radialebene zur Mischkammermündung hin zu verlegen, um einen gegenüber der Komponenteninjektion zeitversetzten Austritt des Inertgases bzw. des Treibmittels bzw. der weiteren Zuschlagsstoffe in die Mischkammer 2 zu erreichen.

Die weitere Zuführung 10 ist mit einem zylindrischen Mündungsbereich 11 versehen, in welchen ein Reinigungskolben 12 bis zur Mündung 10a eingeschoben werden kann. Der Reinigungskolben 12 bildet den vorderen Abschnitt eines Steuerkolbens 13, dessen hinterer Abschnitt 14 in einer Dosierkammer 15 geführt ist und mit einer nicht gezeigten Hydraulikeinheit gekoppelt ist. Diese Hydraulikeinheit bewegt den Steuerkolben reversierend in Richtung des Doppelpfeils 131. Der Durchmesser des hinteren Kolbenabschnitts 14 ist wesentlich größer als der Durchmesser des Reinigungskolbens 12. Den Übergang zwischen dem Reinigungskolben 12 und dem hinteren Kolbenabschnitt 14 bildet eine Kegelfläche 16, welche mit einer entsprechenden Kegelfläche 17 der Dosierkammer 15 einen Ventilsitz bildet. Das Inertgas gelangt über eine Leitung 18 an der Stelle 19 in die Dosierkammer 15, wobei die Stelle 19 in Strömungsrichtung des Inertgases gesehen vor der Kegelfläche 17 liegt, so daß der Ventilsitz der beiden Kegelflächen 16, 17 die Inertgaszufuhr absperrt, wenn der Steuerkolben 15 nach vorwärts gegen die Mischkammer 2 geschoben wird. Da mit dem Austrag des Materials aus der Mischkammer 2 der Druck in der Mischkammer 2 stark ansteigt (von etwa 5 bar auf etwa 40 bar), würden ohne den Verschluß der Mündung 10a durch den Reinigungskolben 12 Materialreste aus der Mischkammer 2 in die Zuführung 10 gelangen und dort aushärten. Der Reinigungskolben 12 hat indessen nicht nur die Funktion, die Mündung 10a abzusperren, sondern die weitere Funktion, das in den Mündungsbereich 11 eingedrungene gemischte Kunststoffmaterial wieder zurück in die Mischkammer 2 zu transportieren. Ein Verstopfen des Mündungsbereichs 11 ist damit ausgeschlossen.

Aus dem vorstehenden Zusammenhang ist ohne weiteres ersichtlich, daß das Austragskolben 3 der Mischkammer 2 erst dann aus der eingezeichneten Endstellung in Austragsrichtung bewegt wird, wenn sich der Reinigungskolben 12 vollständig in den Mündungsbereich 11 hineinbewegt und dabei das gesamte dort eingedrungene Kunststoffmaterial in die Mischkammer 2 zurückgeschoben hat. Falls die Mündung 10a hinter der erwähnten Radialfläche liegt, so kann der Austragskolben 3 aus der gezeigten Endstellung bereits bewegt werden, wenn sich der Reinigungskolben noch nicht in seiner Endstellung an der Mündung 10a befindet. Dies kann so ausgestaltet werden, daß der Austragskolben 3 die Mündungen der Komponentenzuführungen bereits abgesperrt hat, bevor der Treibmittelstrom durch den Steuerkolben 13 unterbrochen wird, wodurch sich eine Nachinjektion von Inertgas in die Komponentenmischung ergibt. Ebensogut kann die Treibmittelinjektion durch den Steuerkolben 13 gleichzeitig mit der Komponenteninjektion unterbrochen werden, wobei dafür gesorgt wird, daß der Reinigungskolben 12 an der Treibmittelmündung 10a angelangt ist, wenn die Stirnfläche des Austragskolbens 3 die Mündung 10a erreicht.

Es versteht sich, daß die Erfindung nicht auf Mischköpfe mit Rezirkulationsnuten in dem Austragskolben beschränkt ist, da die Art der Rezirkulation für die erfindungsgemäßen Maßnahmen keine Rolle spielt. Die Erfindung kann auch bei einem Mischkopf angewendet werden, welcher mehrere Mischkammern aufweist, wobei jede Hochdruck-Mischkammer in der erläuterten Weise eine Inertgas- bzw. Treibmittel- bzw. Zuschlagsstoff-Zufuhr erhält.

Es versteht sich ferner, daß es bei der Erfindung auf die Anzahl der in der Mischkammer gemischten reaktiven Kunststoffkomponenten nicht ankommt. Die nur beispielhaft erwähnten Komponenten Polyol und Isocyanat können z. B. über vier radial versetzte Mündungen, welche alle in derselben Schnittebene liegen, der Mischkammer zugeführt werden, wobei die Komponenten Polyol A, Polyol B, Isocyanat A und Isocyanat B unterschiedliche Konzentrationen und/oder Drucke und/oder Zusätze aufweisen können. Anstelle von komprimierter Luft kommen auch alle anderen Inertgas, wie z. B. Stickstoff, in Betracht.

## Patentansprüche

1. Verfahren zum Herstellen von Zellschaum aus wenigstens zwei reaktiven Kunststoffkomponenten und einem flüssigen Treibmittel, welches durch die bei der Reaktion der Kunststoffkomponenten entstehende Wärme in den gasförmigen Zustand übergeht, bei dem
- in einer Hochdruck-Mischkammer (2) die reaktiven Kunststoffkomponenten zyklisch unter hohem Druck und im Gegenstrom miteinander vermischt werden sowie ein Inertgas zugesetzt wird,
- die Mischung aus der Hochdruck-Mischkammer (2) über einen Beruhigungskanal (4) in einen Formenhohlraum (7) ausgetragen und anschließend die Hochdruck-Mischkammer (2) mittels eines Austragkolbens (3) gereinigt wird, und
- die reaktiven Kunststoffkomponenten zwischen aufeinanderfolgenden Mischzyklen rezirkuliert werden,
**dadurch gekennzeichnet,** daß sowohl das Inertgas als auch das Treibmittel und weitere Zuschlagstoffe, wie z. B. Farbe, aufeinanderfolgend an einer gemeinsamen Stelle (10a) in der Zylinderwand der Hochdruck-Mischkammer (2) zugesetzt werden, welche in der Radialebene durch die Eintrittsstellen (8a) der reaktiven Kunststoffkomponenten in die Hochdruck-Mischkammer (2) liegt, wobei der Druck des Inertgases und des flüssigen Treibmittels etwas größer als der Druck innerhalb der Mischkammer (2) gewählt wird, und daß der Bereich (11) einer Mündung (10a) des Inertgases, des Treibmittels und der weiteren Zuschlagstoffe in die Hochdruck-Mischkammer (2) durch einen Reinigungskolben (12) gesteuert und gereinigt wird, wobei der Austragskolben (3) der Hochdruck-Mischkammer (2) erst dann in Austragsrichtung bewegt wird, wenn sich der Reinigungskolben (12) vollständig in den Mündungsbereich (11) hineinbewegt und dabei das gesamte dort eingedrungene Kunststoffmaterial in die Hochdruck-Mischkammer (2) zurückgeschoben hat.

2. Verfahren zum Herstellen von Zellschaum aus wenigstens zwei reaktiven Kunststoffkomponenten und einem flüssigen Treibmittel, welches durch die bei der Reaktion der Kunststoffkomponenten entstehende Wärme in den gasförmigen Zustand übergeht, bei dem
- in einer Hochdruck-Mischkammer (2) die reaktiven Kunststoffkomponenten zyklisch unter hohem Druck und im Gegenstrom miteinander vermischt werden sowie ein Inertgas zugesetzt wird,
- die Mischung aus der Hochdruck-Mischkammer (2) über einen Beruhigungskanal (4) in einen Formenhohlraum (7) ausgetragen und anschließend die Hochdruck-Mischkammer (2) mittels eines Austragkolbens (3) gereinigt wird, und
- die reaktiven Kunststoffkomponenten zwischen aufeinanderfolgenden Mischzyklen rezirkuliert werden,
**dadurch gekennzeichnet,** daß sowohl das Inertgas als auch das Treibmittel und weitere Zuschlagstoffe, wie z. B. Farbe, aufeinanderfolgend an einer gemeinsamen Stelle (10a) in der Zylinderwand der Hochdruck-Mischkammer (2) zugesetzt werden, welche in der Nähe der Radialebene durch die Eintrittsstellen (8a) der reaktiven Kunststoffkomponenten in die Hochdruck-Mischkammer (2) liegt, wobei der Druck des Inertgases und des flüssigen Treibmittels etwas größer als der Druck innerhalb der Mischkammer (2) gewählt wird, und daß der Bereich (11) einer Mündung (10a) des Inertgases, des Treibmittels und der weiteren Zuschlagstoffe in die Hochdruck-Mischkammer (2) durch einen Reinigungskolben (12) gesteuert und gereinigt wird, wobei der Austragskolben (3) der Hochdruck-Mischkammer (2) bereits in Austragsrichtung bewegt wird, wenn sich der Reinigungskolben (12) noch nicht in seiner Endstellung an der Mündung (10a) befindet, so daß der Austragskolben (3) die Eintrittsstellen (8a) der reaktiven Kunststoffkomponenten in die Mischkammer (2) bereits abgesperrt hat, bevor der Strom aus Treibmittel und Inertgas durch einen in Verlängerung des Reinigungskolbens (12) angeordneten Steuerkolben (13) unterbrochen wird.

3. Verfahren zum Herstellen von Zellschaum aus wenigstens zwei reaktiven Kunststoffkomponenten und einem flüssigen Treibmittel, welches durch die bei der Reaktion der Kunststoffkomponenten entstehende Wärme in den gasförmigen Zustand übergeht, bei dem
- in einer Hochdruck-Mischkammer (2) die reaktiven Kunststoffkomponenten zyklisch unter hohem Druck und im Gegenstrom miteinander vermischt werden sowie ein Inertgas zugesetzt wird,
- die Mischung aus der Hochdruck-Mischkammer (2) über einen Beruhigungskanal (4) in einen Formenhohlraum (7) ausgetragen und anschließend die Hochdruck-Mischkammer (2) mittels eines Austragkolbens (3) gereinigt wird, und
- die reaktiven Kunststoffkomponenten zwischen aufeinanderfolgenden Mischzyklen rezirkuliert werden,
**dadurch gekennzeichnet,** daß sowohl das Inertgas als auch das Treibmittel und weitere Zuschlagstoffe, wie z. B. Farbe, aufeinanderfolgend an einer gemeinsamen Stelle (10a) in der Zylinderwand der Hochdruck-Mischkammer (2) zugesetzt werden, welche in der Nähe der Radialebene durch die Eintrittsstellen (8a) der reaktiven Kunststoffkomponenten in die Hochdruck-Mischkammer (2) liegt, wobei der Druck des Inertgases und des flüssigen Treibmittels etwas größer als der Druck innerhalb der Mischkammer (2) gewählt wird, und daß der Bereich (11) einer Mündung (10a) des Inertgases, des Treibmittels und der weiteren Zuschlagstoffe in die Hochdruck-Mischkammer (2) durch einen Reinigungskolben (12) gesteuert und gereinigt wird, wobei der Austragskolben (3) der Hochdruck-Mischkammer (2) die Eintrittsöffnungen (8a) der reaktiven Kunststoffkomponenten in die Mischkammer (2) zum gleichen Zeitpunkt absperrt, wie der Strom aus Treibmittel und Inertgas durch einen in Verlängerung des Reinigungskolbens (12) angeordneten Steuerkolben (13) unterbrochen wird und dabei der Reinigungskolben (12) an der Mündung (10a) angelangt ist, wenn die Stirnfläche des Austragskolbens (3) die Mündung (10a) erreicht.

4. Verfahren nach Anspruch 2 oder 3, **dadurch gekennzeichnet,** daß die Eintrittsstelle (10a) des Inertgases bzw. des Treibmittels bzw. der weiteren Zuschlagsstoffe - in Austragsrichtung der Mischung gesehen - hinter der Radialebene liegt.

5. Vorrichtung zum Herstellen von Zellschaum aus wenigstens zwei reaktiven Kunststoffkomponenten und einem flüssigen Treibmittel, welches durch die bei der Reaktion der Kunststoffkomponenten entstehende Wärme in den gasförmigen Zustand übergeht, mit
- einer Hochdruck-Mischkammer (2), in welche Zuführungen (8a) zum zyklischen Injizieren der reaktiven Kunststoffkomponenten münden,
- einer Zuführung (10) für ein Inertgas,
- einem in der Hochdruck-Mischkammer (2) reversierend gelagerten Austragskolben (3) zum zyklischen Austragen der Mischung in einen anschließenden Formhohlraum (7) über einen zwischengeschalteten Beruhigungskanal (4) sowie zur gleichzeitigen Reinigung der Hochdruck-Mischkammer (2), und
- einer Rezirkulationseinrichtung (3a) zum Rezirkulieren der reaktiven Kunststoffkomponenten zwischen zwei aufeinanderfolgenden Mischzyklen,
**dadurch gekennzeichnet**, daß die Zuführung (10) für das Inertgas ferner zum auschließenden Zuführen des Treibmittels und zum auschließenden Zuführen weiterer Zuschlagstoffe, wie z. B. Farbe, vorgesehen ist und an einer Stelle (10a) in der Zylinderwand der Hochdruck-Mischkammer (2) mündet, welche in der Radialebene durch die Mündungen (z.B. 8a) der reaktiven Kunststoffkomponenten in die Hochdruck-Mischkammer (2) liegt, daß der Mündungsbereich (11) der Inertgaszuführung (10) zylindrisch ausgebildet ist und von einem Reinigungskolben (12) zur Hochdruck-Mischkammer (2) hin verschließbar ist, wobei der Austragskolben (3) der Hochdruck-Mischkammer (2) erst dann in Austragsrichtung bewegt wird, wenn sich der Reinigungskolben (12) vollständig in den Mündungsbereich (11) hineinbewegt und dabei das gesamte dort eingedrungene Kunststoffmaterial in die Hochdruck-Mischkammer (2) zurückgeschoben hat.

6. Vorrichtung zum Herstellen von Zellschaum aus wenigstens zwei reaktiven Kunststoffkomponenten und einem flüssigen Treibmittel, welches durch die bei der Reaktion der Kunststoffkomponenten entstehende Wärme in den gasförmigen Zustand übergeht, mit
- einer Hochdruck-Mischkammer (2), in welche Zuführungen (8a) zum zyklischen Injizieren der reaktiven Kunststoffkomponenten münden,
- einer Zuführung (10) für ein Inertgas,
- einem in der Hochdruck-Mischkammer (2) reversierend gelagerten Austragskolben (3) zum zyklischen Austragen der Mischung in einen anschließenden Formhohlraum (7) über einen zwischengeschalteten Beruhigungskanal (4) sowie zur gleichzeitigen Reinigung der Hochdruck-Mischkammer (2), und
- einer Rezirkulationseinrichtung (3a) zum Rezirkulieren der reaktiven Kunststoffkomponenten zwischen zwei aufeinanderfolgenden Mischzyklen,
**dadurch gekennzeichnet,** daß die Zuführung (10) für das Inertgas ferner zum auschließenden Zuführen der Treibmittels und zum auschließenden Zuführen weiterer Zuschlagstoffe, wie z. B. Farbe, vorgesehen ist und an einer Stelle (10a) in der Zylinderwand der Hochdruck-Mischkammer (2) mündet, welche in der Nähe der Radialebene durch die Mündungen (z.B. 8a) der reaktiven Kunststoffkomponenten in die Hochdruck-Misch-kammer (2) liegt, daß der Mündungsbereich (11) der Inertgaszuführung (10) zylindrisch ausgebildet ist und von einem Reinigungskolben (12) zur Hoch-druck-Mischkammer (2) hin verschließbar ist, wobei der Austragskolben (3) der Hochdruck-Mischkammer (2) bereits in Austragsrichtung bewegt wird, wenn sich der Reinigungskolben (12) noch nicht in seiner Endstellung an der Mündung (10a) befindet, so daß der Austragskolben (3) die Eintrittsstellen (8a) der reaktiven Kunststoff-komponenten in die Mischkammer (2) bereits abgesperrt hat, bevor der Strom aus Treibmittel und Inertgas durch einen in Verlängerung des Reinigungs-kolbens (12) angeordneten Steuerkolben (13) unterbrochen wird.

7. Vorrichtung zum Herstellen von Zellschaum aus wenigstens zwei reaktiven Kunststoffkomponenten und einem flüssigen Treibmittel, welches durch die bei der Reaktion der Kunststoffkomponenten entstehende Wärme in den gasförmigen Zustand übergeht, mit
- einer Hochdruck-Mischkammer (2), in welche Zuführungen (8a) zum zyklischen Injizieren der reaktiven Kunststoffkomponenten münden,
- einer Zuführung (10) für ein Inertgas,
- einem in der Hochdruck-Mischkammer (2) reversierend gelagerten Austragskolben (3) zum zyklischen Austragen der Mischung in einen anschließenden Formhohlraum (7) über einen zwischengeschalteten Beruhigungskanal (4) sowie zur gleichzeitigen Reinigung der Hochdruck-Mischkammer (2), und
- einer Rezirkulationseinrichtung (3a) zum Rezirkulieren der reaktiven Kunststoffkomponenten zwischen zwei aufeinanderfolgenden Mischzyklen,
**dadurch gekennzeichnet**, daß die Zuführung (10) für das Inertgas ferner zum auschließenden Zuführen des Triebmittels und zum auschließenden Zuführen weiterer Zuschlagstoffe, wie z. B. Farbe, vorgesehen ist und an einer Stelle (10a) in der Zylinderwand der Hochdruck-Mischkammer (2) mündet, welche in der Nähe der Radialebene durch die Mündungen (z.B. 8a) der reaktiven Kunststoffkomponenten in die Hochdruck-Misch-kammer (2) liegt, daß der Mündungsbereich (11) der Inertgaszuführung (10) zylindrisch ausgebildet ist und von einem Reinigungskolben (12) zur Hoch-druck-Mischkammer (2) hin verschließbar ist, wobei der Austragskolben (3) der Hochdruck-Mischkammer (2) die Eintrittsöffnungen (8a) der reaktiven Kunststoffkomponenten in die Mischkammer (2) zum gleichen Zeitpunkt absperrt, wie der Strom aus Treibmittel und Inertgas durch einen in Verlängerung des Reinigungskolbens (12) angeordneten Steuerkolben (13) unterbrochen wird und dabei der Reinigungskolben (12) an der Mündung (10a) angelangt ist, wenn die Stirnfläche des Austragskolbens (3) die Mündung (10a) erreicht.

8. Vorrichtung nach Anspruch 6 oder 7, **dadurch gekennzeichnet,** daß die Mündungsstelle (10a) der Inertgaszuführung (10) - in Austragsrichtung des Austragskolbens (3) gesehen - hinter der Radialebene liegt.

9. Vorrichtung nach einem der Ansprüche 5 bis 8, **dadurch gekennzeichnet,** daß der Reinigungskolben (12) den vorderen, im Durchmesser kleineren Abschnitt des Steuerkolbens (13) bildet, dessen hinterer, im Durchmesser größerer Abschnitt (14) in einer Dosierkammer (15) für das Inertgas und ggfs. das Treibmittel und/oder die weiteren Zuschlagsstoffe angeordnet ist.

10. Vorrichtung nach einem der Ansprüche 5 bis 10, **dadurch gekennzeich****net,** daß zwischen dem Reinigungskolben (12) und dem hinteren Abschnitt (14) des Steuerkolbens (13) ein kegeliger Übergangsbereich (16) vorgesehen ist, welcher mit einer entsprechenden Kegelfläche (17) der Dosierkammer (15) einen Ventilsitz zum Absperren des Inertgases bzw. Treibmittels bzw. der weiteren Zuschlagsstoffe bildet.

11. Vorrichtung nach einem der Ansprüche 5 bis 10, **dadurch gekennzeich****net,** daß eine in die Dosierkammer (15) vor dem Ventilsitz mündende Speiseleitung (18) wahlweise mit einer Inertgasquelle oder mit einer Treibmittelquelle oder mit einer Quelle für weitere Zuschlagsstoffe verbindbar ist.

## Claims

1. Method for producing foam from at least two reactive synthetic components and a liquid propellant, which passes into the gaseous state due to the heat produced upon the reaction of the synthetic components, in which
- in a high pressure mixing chamber (2), the reactive synthetic components are mixed with each other cyclically under high pressure and with a counter flow and an inert gas is added,
- the mixture is discharged from the high pressure mixing chamber (2) by way of a stilling channel (4) into a mould cavity (7) and then the high pressure mixing chamber (2) is cleaned by means of a discharge piston (3), and
- the reactive synthetic components are recirculated between successive mixing cycles,
characterised in that both the inert gas as well as the propellant and further additives, such as for example dye, are added in succession at a common point (10a) in the cylinder wall of the high pressure mixing chamber (2), which lies in the radial plane through the inlet points (8a) for the reactive synthetic components into the high pressure mixing chamber (2), the pressure of the inert gas and of the liquid propellant being chosen to be somewhat greater than the pressure within the mixing chamber (2), and that the region (11) of an opening (1Oa) for inert gas, the propellant and the further additives into the high pressure mixing chamber (2) is controlled and cleaned by a cleaning piston (12), the discharge piston (3) of the high pressure mixing chamber (2) being moved in the discharge direction solely when the cleaning piston (12) moves completely into the opening region (11) and in this case has pushed back into the high pressure mixing chamber (2) all the synthetic material which has penetrated the region (11).

2. Method for producing foam from at least two reactive synthetic components and a liquid propellant, which passes into the gaseous state due to the heat produced upon the reaction of the synthetic components, in which
- in a high pressure mixing chamber (2), the reactive synthetic components are mixed with each other cyclically under high pressure and with a counter-flow and an inert gas is added,
- the mixture is discharged from the high pressure mixing chamber (2) by way of a stilling channel (4) into a mould cavity (7) and then the high pressure mixing chamber (2) is cleaned by means of a discharge piston (3), and
- the reactive synthetic components are recirculated between successive mixing cycles,
characterised in that both the inert gas as well as the propellant and further additives, such as for example dye, are added in succession at a common point (10a) in the cylinder wall of the high pressure mixing chamber (2), which is located in the vicinity of the radial plane through the inlet points (8a) for the reactive synthetic components into the high pressure mixing chamber (2), the pressure of the inert gas and of the liquid propellant being chosen to be somewhat greater than the pressure within the mixing chamber (2), and that the region (11) of an opening (lOa) for the inert gas, the propellant and the further additives into the high pressure mixing chamber (2) is controlled and cleaned by a cleaning piston (12), the discharge piston (3) of the high pressure mixing chamber (2) already being moved in the discharge direction when the cleaning piston (12) is not yet located in its end position at the opening (10a), so that the discharge piston (3) has already closed off the inlet points (8a) for the reactive synthetic components into the mixing chamber (2), before the stream of propellant and inert gas is interrupted by a control piston (13) disposed as an extension of the cleaning piston (12).

3. Method for producing foam from at least two reactive synthetic components and a liquid propellant, which passes into the gaseous state due to the heat produced upon the reaction of the synthetic components, in which
- in a high pressure mixing chamber (2), the reactive synthetic components are mixed with each other cyclically under high pressure and with a counter-flow and an inert gas is added,
- the mixture is discharged from the high pressure mixing chamber (2) by way of a stilling channel (4) into a mould cavity (7) and then the high pressure mixing chamber (2) is cleaned by means of a discharge piston (3), and
- the reactive synthetic components are recirculated between successive mixing cycles,
characterised in that both the inert gas as well as the propellant and further additives, such as for example dye, are added in succession at a common point (10a) in the cylinder wall of the high pressure mixing chamber (2), which lies in the vicinity of the radial plane through the inlet points (8a) for the reactive synthetic components into the high pressure mixing chamber (2), the pressure of the inert gas and of the liquid propellant being chosen to be somewhat greater than the pressure within the mixing chamber (2), and that the region (11) of an opening (10a) for the inert gas, the propellant and the other additives into the high pressure mixing chamber (2) is controlled and cleaned by a cleaning piston (12), the discharge piston (3) of the high pressure mixing chamber (2) closing off the inlet openings (8a) for the reactive synthetic components into the mixing chamber (2) at the same instant that the stream of propellant and inert gas is interrupted by a control piston (13) arranged as an extension of the cleaning piston (12) and in this case the cleaning piston (12) has arrived at the opening (10a) when the end face of the discharge piston (3) reaches the opening (10a).

4. Method according to Claim 2 or 3, characterised in that - seen in the discharge direction of the mixture - the inlet point (10a) for the inert gas or the propellant or the further additives lies behind the radial plane.

5. Apparatus for producing foam from at least two reactive synthetic components and a liquid propellant, which passes into the gaseous state due to the heat produced upon the reaction of the synthetic components, with
- a high pressure mixing chamber (2), into which open inlets (8a) for the cyclic injection of the reactive synthetic components,
- an inlet (10) for an inert gas,
- a discharge piston (3) mounted to reverse in the high pressure mixing chamber (2), for the cyclic discharge of the mixture into an adjoining mould cavity (7) by way of an interposed stilling channel (4) as well as for the simultaneous cleaning of the high pressure mixing chamber (2), and
- a recirculating device (3a) for recirculating the reactive synthetic components between two successive mixing cycles,
characterised in that the inlet (10) for the inert gas is furthermore provided for the subsequent supply of the propellant and for the subsequent supply of further additives, such as for example dye and opens at a point (10a) in the cylinder wall of the high pressure mixing chamber (2), which is located in the radial plane through the openings (for example 8a) for the reactive synthetic components into the high pressure mixing chamber (2), that the opening region (11) of the inert gas inlet (10) is constructed cylindrically and can be closed off by a cleaning piston (12) towards the high pressure mixing chamber (2), the discharge piston (3) of the high pressure mixing chamber (2) being moved in the discharge direction only when the cleaning piston (12) moves completely into the opening region (11) and in this case has pushed back into the high pressure mixing chamber (2) all the synthetic material which has penetrated the region (11).

6. Apparatus for producing foam from at least two reactive synthetic components and a liquid propellant, which passes into the gaseous state due to heat produced upon the reaction of the synthetic components, with
- a high pressure mixing chamber (2), into which open inlets (8a) for the cyclic injection of the reactive synthetic components,
- an inlet (10) for an inert gas,
- a discharge piston (3) mounted to reverse in the high pressure mixing chamber (2) for the cyclic discharge of the mixture into an adjoining mould cavity (7) by way of an interposed stilling channel (4) and for the simultaneous cleaning of the high pressure mixing chamber (2), and
- a recirculation device (3a) for recirculating the reactive synthetic components between two successive mixing cycles,
characterised in that the inlet (10) for the inert gas is furthermore provided for the subsequent supply of the propellant and for the subsequent supply of further additives, such as for example dye, and opens at a point (10a) in the cylinder wall of the high pressure mixing chamber (2), which is located in the vicinity of the radial plane through the openings (for example 8a) for the reactive synthetic components into the high pressure mixing chamber (2), that the opening region (11) of the inert gas inlet (10) is constructed cylindrically and can be closed off by a cleaning piston (12) towards the high pressure mixing chamber (2), the discharge piston (3) of the high pressure mixing chamber (2) already being moved in the discharge direction when the cleaning piston (12) is not yet located in its end position at the opening (10a), so that the discharge piston (3) has already closed off the inlet points (8a) for the reactive synthetic components into the mixing chamber (2), before the stream of propellant and inert gas is interrupted by a control piston (13) arranged as an extension of the cleaning piston (12).

7. Apparatus for producing foam from at least two reactive synthetic components and a liquid propellant, which passes into the gaseous state due to the heat produced upon the reaction of the synthetic components, with
- a high pressure mixing chamber (2), into which open inlets (8a) for the cyclic injection of the reactive synthetic components,
- an inlet (10) for an inert gas,
- a discharge piston (3) mounted to reverse in the high pressure mixing chamber (2) for the cyclic discharge of the mixture into an adjoining mould cavity (7) by way of an interposed stilling channel (4) and for the simultaneous cleaning of the high pressure mixing chamber (2), and
- a recirculation device (3a) for recirculating the reactive synthetic components between two successive mixing cycles,
characterised in that the inlet (10) for the inert gas is furthermore provided for the subsequent supply of propellant and for the subsequent supply of further additives, such as for example dye, and opens at a point (10a) in the cylinder wall of the high pressure mixing chamber (2), which is located in the vicinity of the radial plane through the openings (for example 8a) of the reactive synthetic components into the high pressure mixing chamber (2), that the opening region (11) of the inert gas inlet (10) is constructed cylindrically and can be closed off by a cleaning piston (12) towards the high pressure mixing chamber (2), the discharge piston (3) of the high pressure mixing chamber (2) closing off the inlet openings (8a) for the reactive synthetic components into the mixing chamber (2) at the same time that the stream of propellant and inert gas is interrupted by a control piston (13) arranged as an extension of the cleaning piston (12) and in this case the cleaning piston (12) has arrived at the opening (10a) when the end face of the discharge piston (3) reaches the opening (10a).

8. Apparatus according to Claim 6 or 7, characterised in that - seen in the discharge direction of the discharge piston (3) - the opening point (10a) of the inert gas inlet (10) lies behind the radial plane.

9. Apparatus according to one of Claims 5 to 8, characterised in that the cleaning piston (12) forms the front section of smaller diameter of the control piston (13), whereof the rear section (14) of larger diameter is located in a dosing chamber (15) for the inert gas and possibly the propellant and/or the other additives.

10. Apparatus according to one of Claims 5 to 10, characterised in that provided between the cleaning piston (12) and the rear section (14) of the control piston (13) is a conical transition region (16), which with a corresponding conical surface (17) of the dosing chamber (15) forms a valve seat for shutting off the inert gas or propellant or further additives.

11. Apparatus according to one of Claims 5 to 10, characterised in that a supply line (18) opening into the dosing chamber (15) in front of the valve seat can be connected optionally to a source of inert gas or to a source of propellant or to a source of further additives.

## Revendications

1. Procédé de production de mousse alvéolaire ou cellulaire à partir d'au moins deux composants réactifs et d'un agent porogène liquide, qui passe à l'état gazeux sous l'effet de la chaleur dégagée pendant la réaction de ces composants pour former une matière plastique ou de synthèse, procédé dans lequel
- dans une chambre (2) de mélangeage sous haute pression, les composants réactifs générateurs de la matière plastique sont mélangés, cycliquement, sous pression élevée et à contre-courant l'un de l'autre et un gaz inerte y est ajouté,
- le mélange provenant de la chambre (2) de mélangeage sous haute pression est refoulé en passant par un canal (4) de stabilisation pour parvenir dans une cavité (7) de moule et la chambre (2) de mélangeage sous haute pression est ensuite nettoyée à l'aide d'un piston (3) de refoulement, et
- les composants réactifs générateurs de la matière plastique sont remis en circulation entre des cycles successifs de mélangeage,
procédé caractérisé en ce que le gaz inerte aussi bien que l'agent porogène et d'autres additifs, comme par exemple un colorant, sont successivement ajoutés en un emplacement (10a) commun de la paroi cylindrique de la chambre (2) de mélangeage sous haute pression, qui se trouve dans le plan radial passant par les emplacements d'entrée (8a) des composants réactifs dans la chambre (2) de mélangeage sous haute pression, la pression du gaz inerte et de l'agent porogène liquide étant choisie de façon à être un peu plus grande que la pression régnant à l'intérieur de la chambre (2) de mélangeage, et en ce que la zone (11) d'un orifice (10a) d'introduction du gaz inerte, de l'agent porogène et d'autres additifs débouchant dans la chambre (2) de mélangeage sous haute pression est commandée et nettoyée par un piston (12) de nettoyage, le piston (3) de refoulement de la chambre (2) de mélangeage sous haute pression n'étant déplacé en direction du refoulement que lorsque le piston (12) de nettoyage a entièrement pénétré dans la zone (11) d'embouchure et a ainsi refoulé dans la chambre (2) de mélangeage sous haute pression la totalité de la matière plastique qui y avait pénétré.

2. Procédé de production de mousse alvéolaire ou cellulaire à partir d'au moins deux constituants réactifs générateurs de la mousse et d'un agent porogène liquide, qui passe à l'état gazeux sous l'effet de la chaleur dégagée pendant la réaction de ces composants, procédé dans lequel
- les composants réactifs générateurs de la matière plastique sont cycliquement mélangés sous haute pression et à contre-courant l'un de l'autre dans une chambre (12) de mélangeage sous haute pression, et un gaz inerte y est ajouté,
- le mélange est refoulé de la chambre (2) de mélangeage sous haute pression, en passant par un canal (4) de stabilisation dans une cavité (7) de moule et la chambre (2) de mélangeage sous haute pression est ensuite nettoyée à l'aide d'un piston (3) de refoulement, et
- les composants réactifs générateurs de la matière plastique sont remis en recirculation entre des cycles successifs de mélangeage,
procédé caractérisé en ce que aussi bien le gaz inerte que, également, l'agent porogène et d'autres additifs, comme, par exemple, du colorant, sont ajoutés successivement en un endroit commun (10a) de la paroi cylindrique de la chambre ( 2) de mélangeage sous haute pression, cet endroit se situant au voisinage du plan radial passant par les emplacements d'entrée (8a) des composants réactifs dans la chambre (2) de mélangeage sous haute pression, la pression du gaz inerte et de l'agent porogène liquide étant choisie de façon à être un peu supérieure à la pression régnant à l'intérieur de la chambre (2) de mélangeage, et la zone (11) d'un orifice d'introduction du gaz inerte, de l'agent porogène et des autres additifs débouchant dans la chambre (2) de mélangeage sous haute pression est commandée et nettoyée à l'aide d'un piston (12) de nettoyage, le piston (3) de refoulement de la chambre (2) de mélangeage sous haute pression étant déjà déplacé dans la direction du refoulement alors que le piston (12) de nettoyage ne se trouve pas encore dans sa position terminale à l'orifice (10a), de sorte que le piston de refoulement (3) a déjà obturé les emplacements d'entrée (8a) des composants réactifs, générateurs de la matière plastique, dans la chambre (2) de mélangeage avant que le courant d'écoulement de l'agent porogène et du gaz inerte soit interrompu par un piston de commande (13) disposé dans un prolongement du piston (12) de nettoyage.

3. Procédé de production de mousse alvéolaire ou cellulaire à partir d'au moins deux composants réactifs générateurs d'une matière plastique et d'un agent porogène liquide, qui passe à l'état gazeux sous l'effet de la chaleur dégagée pendant la réaction de ces composants, procédé dans lequel
- dans une chambre (2) de mélangeage sous haute pression, les composants réactifs générateurs de la matière plastique sont cycliquement mélangés sous haute pression et à contre-courant l'un de l'autre et un gaz inerte y est ajouté,
- le mélange est refoulé de la chambre (2) de mélangeage sous haute pression, en passant par un canal (4) de stabilisation, dans une cavité (7) de moule, puis la chambre (2) de mélangeage sous haute pression est nettoyée à l'aide d'un piston (3) de refoulement, et
- les composants réactifs générateurs de la matière plastique sont remis en circulation entre des cycles successifs de mélangeage,
procédé caractérisé en ce qu'aussi bien le gaz inerte que l'agent porogène et d'autres additifs comme, par exemple, du colorant, sont introduits successivement en un emplacement (10a) commun de la paroi cylindrique de la chambre (2) de mélangeage sous haute pression, endroit qui est au voisinage du plan radial passant par les emplacements d'entrée (8a) des composants réactifs dans la chambre (2) de mélangeage sous haute pression, la pression du gaz inerte et de l'agent porogène liquide étant choisie un peu supérieure à la pression régnant à l'intérieur de la chambre (2) de mélangeage, et en ce que la zone (11) d'un orifice (10a) de débouché du gaz inerte, de l'agent porogène et des autres additifs dans la chambre (2) de mélangeage sous haute pression est commandée et nettoyée par un piston (12) de nettoyage, le piston (3) de refoulement équipant la chambre (2) de mélangeage sous haute pression fermant les orifices (8a) d'entrée des composants réactifs dans la chambre (2) de mélangeage au même instant où le courant de l'agent porogène et du gaz inerte est interrompu par un piston de commande (13) disposé dans le prolongement du piston (12) de nettoyage et, ainsi, le piston (12) de nettoyage parvient à l'orifice (10a) lorsque la surface frontale du piston (3) de refoulement atteint l'orifice (10a) de débouché.

4. Procédé selon la revendication 2 ou 3, caractérisé en ce que les emplacements (10a) d'entrée du gaz inerte ou de l'agent porogène ou des autres additifs se situent -quand on regarde dans la direction de refoulement du mélange- derrière le plan radial.

5. Dispositif de production de mousse alvéolaire ou cellulaire à partir d'au moins deux composants réactifs, générateurs d'une matière plastique, et d'un agent porogène liquide, lequel passe à l'état gazeux sous l'effet de la chaleur dégagée pendant la réaction de ces composants pour former une matière plastique ou de synthèse, dispositif comportant
- une chambre (2) de mélangeage sous haute pression, dans laquelle débouchent des conduits (8a) d'amenée pour des injections cycliques des composants réactifs générateurs de la matière plastique,
- un conduit (10) d'amenée d'un gaz inerte,
- un piston (3) de refoulement, monté réversible dans la chambre (2) de mélangeage sous haute pression pour refouler cycliquement le mélange dans une cavité (7) immédiatement adjacente de mousse, en passant par un canal (4) de stabilisation interposé ainsi que pour nettoyer en même temps la chambre (2) de nettoyage sous haute pression, et
- un dispositif de recirculation (3a) pour recycler ou faire recirculer les composants réactifs, générateurs de la matière plastique, entre deux cycles successifs de mélangeage,
dispositif caractérisé en ce que le conduit (10) d'arrivée du gaz inerte est prévu en outre pour l'acheminement exclusif de l'agent porogène et pour l'acheminement exclusif d'autres additifs, comme par exemple du colorant, et ce conduit débouche en un emplacement (10a) de la paroi cylindrique de la chambre (2) de mélangeage sous haute pression qui se situe dans le plan radial passant par les débouchés (par exemple orifice 8a) des composants réactifs, générateurs de la matière plastique, dans la chambre (2) de mélangeage sous haute pression ; en ce que la zone (11) de débouché du conduit (10) d'arrivée du gaz inerte a une forme cylindrique et peut être obturée, vers la chambre (2) de mélangeage sous haute pression, par un piston (12) de nettoyage, le piston (3) de refoulement équipant la chambre (2) de mélangeage sous haute pression n'étant déplacé, dans la direction du refoulement, que lorsque le piston (12) de nettoyage a entièrement pénétré dans la zone (11) du débouché et a ainsi repoussé dans la chambre (2) de mélangeage sous haute pression la totalité de la matière synthétique ou plastique ayant pénétré dans cette zone.

6. Dispositif de production de mousse cellulaire ou alvéolaire à partir d'au moins deux composants réactifs générateurs d'une matière plastique et d'un agent porogène liquide, lequel passe à l'état gazeux sous l'effet de la chaleur dégagée pendant la réaction des composants producteurs de la matière plastique, le dispositif comportant :
- une chambre (2) de mélangeage sous haute pression, dans laquelle débouchent des conduits d'arrivée (8a) pour l'injection cyclique des composants réactifs générateurs de la matière plastique,
- un conduit (10) d'arrivée d'un gaz inerte,
- un piston (3) de refoulement, monté réversible dans la chambre (2) de mélangeage sous haute pression pour refouler cycliquement le mélange dans une cavité (7) adjacente de moule, en passant par un canal (4) interposé pour une stabilisation, ainsi que pour nettoyer en même temps la chambre (2) de mélangeage sous haute pression, et
- un dispositif de recirculation (3a) pour faire recirculer ou recycler, entre deux cycles successifs de mélangeage, les composants réactifs de la matière plastique,
dispositif caractérisé en ce que le conduit d'arrivée (10) du gaz inerte est prévu en outre pour l'acheminement exclusif de l'agent porogène et pour l'acheminement exclusif d'autres additifs, comme par exemple du colorant, et débouche en un emplacement (10a) de la paroi cylindrique de la chambre (2) de mélangeage sous haute pression, qui se situe au voisinage du plan radial passant par les orifices (par exemple 8a) d'introduction des composants réactifs générateurs de la matière plastique dans la chambre (2) de mélangeage sous haute pression ; en ce que la zone (11) de débouché du conduit (10) d'arrivée du gaz inerte a une forme cylindrique et peut être obturée, du côté de la chambre (2) de mélangeage sous haute pression, par un piston (12) de nettoyage, le piston de refoulement (3) équipant la chambre (2) de mélangeage sous haute pression étant déjà déplacé dans la direction du refoulement alors que le piston de nettoyage (12) ne se trouve pas encore dans sa position terminale à l'orifice de débouché (10a), de sorte que le piston de refoulement (3) a déjà obturé les positions d'entrée (8a) des composants réactifs, générateurs de la matière plastique, dans la chambre (2) de mélangeage avant que le courant de l'agent porogène et de gaz inerte n'ait été interrompu par un piston de commande (12) disposé dans le prolongement du piston (12) de nettoyage.

7. Dispositif de production d'une mousse cellulaire ou alvéolaire à partir d'au moins deux composants réactifs générateurs d'une matière plastique et d'un agent porogène liquide, lequel passe à l'état gazeux sous l'effet de la chaleur résultant de la réaction des composants générateurs de la matière plastique, le dispositif comportant
- une chambre (2) de mélangeage sous haute pression, dans laquelle débouchent des conduits (8a) d'arrivée pour l'injection cyclique des composants réactifs générateurs de la matière plastique,
- un conduit (10) d'arrivée d'un gaz inerte,
- un piston (3) de refoulement, monté réversible dans la chambre (2) de mélangeage sous haute pression pour refouler cycliquement le mélange, en passant par un canal (4) intercalé pour la stabilisation, dans une cavité (7) de moule adjacent, ainsi que pour nettoyer en même temps la chambre (2) de mélangeage sous haute pression, et
- un dispositif (3a) de recirculation pour recycler ou faire recirculer, entre deux cycles successifs de mélangeage, les composants réactifs générateurs de la matière plastique,
dispositif caractérisé en ce que le conduit (10) d'arrivée du gaz inerte est prévu également pour l'acheminement exclusif de l'agent porogène et pour l'acheminement exclusif d'autres additifs, comme par exemple du colorant, et débouche en un emplacement (10a) de la paroi cylindrique de la chambre (2) de mélangeage sous haute pression qui se situe au voisinage du plan radial passant par les orifices (par exemple 8a) de débouché des composants réactifs, générateurs de la matière plastique, dans la chambre (2) de mélangeage sous haute pression ; en ce que la zone (11) de débouché du conduit (10) d'arrivée du gaz inerte a une forme cylindrique et en ce que ce conduit peut être obturé, du côté de la chambre (2) de mélangeage sous haute pression, par un piston (12) de nettoyage, le piston (3) de refoulement monté dans la chambre (2) de mélangeage sous haute pression fermant les orifices (8a) d'entrée des composants réactifs, générateurs de la matière plastique, dans la chambre (2) de mélangeage au même moment où le courant de l'agent porogène et du gaz inerte est interrompu par un piston (13) de commande disposé en prolongement du piston (12) de nettoyage et, ainsi, le piston (12) de nettoyage arrive au débouché (10a) lorsque la surface frontale du piston (3) de refoulement atteint l'orifice (10a) de débouché.

8. Dispositif selon la revendication 6 ou 7, caractérisé en ce que les emplacements de débouché (10a) du conduit (10) d'acheminement du gaz inerte se situent -quand on regarde dans la direction de refoulement du piston (3) de refoulement- derrière le plan radial.

9. Dispositif selon l'une des revendications 5 à 8, caractérisé en ce que le piston de nettoyage ((12) forme le tronçon avant, d'un plus petit diamètre, du piston (13) de commande, dont le tronçon arrière (14), de plus grand diamètre, est disposé dans une chambre (15) doseuse du gaz inerte et éventuellement de l'agent porogène et/ou des autres additifs.

10. Dispositif selon l'une des revendications 5 à 10, caractérisé en ce que, entre le piston (12) de nettoyage et le tronçon arrière (14) du piston (13) de commande est prévue une zone (16) conique de transition, qui forme, avec une surface conique (17) correspondante de la chambre doseuse (15), un siège de clapet pour obturer le trajet du gaz inerte ou de l'agent porogène ou d'autres additifs.

11. Dispositif selon l'une des revendications 5 à 10, caractérisé en ce qu'un conduit (18) d'alimentation, débouchant en avant du siège de clapet dans la chambre doseuse (15) peut être relié à volonté à une source de gaz inerte ou à une source d'agent porogène ou à une source d'autres additifs.
